# EUROPEAN PATENT APPLICATION

(11) **EP 2 660 001 A1**
(43) Date of publication of application: **06.11.2013**
(21) Application number: 11853586.3
(22) Date of filing: 08.12.2011
(51) Int. Cl.: B23K 26/32, B23K 26/00, B23K 26/08, B29C 45/14

(54) **METHOD FOR MANUFACTURING COMPOSITE MOLDED BODY**

(30) Priority: 28.12.2010 JP 2010291803; 11.08.2011 JP 2011175544; 10.11.2011 JP 2011246120
(71) Applicant: Daicel Corporation, Osaka-shi, Osaka 530-0001 (JP); Daicel Polymer Ltd., Tokyo 108-8231 (JP)
(72) Inventor: OKUMURA Arimichi, Himeji-shi Hyogo 671-1281 (JP); ASAMI Yoshihiro, Himeji-shi Hyogo 671-1281 (JP)
(74) Representative: Grünecker, Kinkeldey, Stockmair & Schwanhäusser
(86) International application number: PCT/JP2011/078429
(87) International publication number: WO 2012/090671

(57) **Abstract**

A method of manufacturing a composite molded article including a metal molded article and a resin molded article, the method including steps of: performing laser scanning on a joint surface of the metal molded article so as to form markings including straight lines and/or curved lines in a certain direction or in the different direction, and performing laser scanning so that the markings including the respective straight lines and/or the respective curved lines do not intersect with each other; and positioning, in a die, a portion including the joint surface of the metal molded article in which the marking is formed, to thereby perform insert-molding of a resin serving as the resin molded article.

## Description

### Technical Field

The present invention relates to a method of manufacturing a composite molded article including a metal molded article and a resin molded article.

### Background Art

From viewpoint of reduction in weight of various parts, although a resin molded article is used as a metal substitute, but there remain many cases where all metal parts are difficult to be substituted by resin. In such a case, it is considered that a new composite part by the joining and integration of a metal molded article and a resin molded article is manufactured.
However, any technique in which a metal molded article and a resin molded article are joined and integrated in an industrially advantageous manner and with high joint strength has not yet been put into practical use.

In Japanese Patent No. 4020957, there is described an invention relating to a laser machining method of a metal surface for being joined to a different material (resin), which includes steps of performing laser scanning on a metal surface in a certain scanning direction, and performing laser scanning in another direction crossing thereto.
In JP-A 2010-167475, there is disclosed an invention to a laser machining method for performing laser scanning further several times in a superimposed manner in the invention of Japanese Patent No. 4020957.

However, in the inventions of Japanese Patent No. 4020957 and JP-A 2010-167475, since the laser scanning operation is necessarily performed in the two crossing directions, there is room for improvement in that a long period of time is required for the machining.
In addition, although it is considered that a joint strength can be enhanced because of being able to perform sufficient surface roughening treatment by the laser scanning in the crossing directions, there is a problem in which the directional properties of strength at the joint part of metal and resin may not be stable due to non-uniform surface roughness condition.
For instance, there is a risk of causing a problem in which a certain junction material has the highest shearing stress and tensile strength in the X axial direction, but another junction material has the highest shearing stress and tensile strength in the Y axial direction which is different from the X axial direction, and furthermore other junction material has the highest shearing stress and tensile strength in the Z axial direction which is different from the X and Y axial directions.
Depending on a certain product (for example, a part which rotates in the one direction, or a part which moves reciprocally in the one direction), there is a case where a composite article of metal and resin, having a high joint strength in the particular direction is required. However, the inventions of Japanese Patent No. 4020957 and JP-A 2010-167475 cannot satisfy the above-mentioned request sufficiently.

Moreover, in the case where a joint surface includes a complicated shape or a shape including part having narrow width (for example, star shape, triangle, dumbbell shape), when performing laser scanning in the crossing directions, it is considered that sufficient joint strength cannot be obtained since the surface roughening treatment is partly non-uniform.

In JP-A 10-294024, there is described an invention of a method of manufacturing electric and electronic parts by irradiating a metal surface with a laser beam to form irregularities, and performing injection-molding of a resin, rubber, or the like to the irregularity-formed portion.
In Embodiments 1 to 3, there are described that the irradiation of a surface of a long metal coil with laser light is performed to form irregularities. In addition, in the paragraph 10, there is described that the surface of a long metal coil is made rougher to be striped or satin finished surface, and in the paragraph 19 there is described that the surface of the long metal coil is made rougher to be striped, dotted, broken, knurled, or satin finished surface.
However, as described in Effect of Invention of the paragraphs 21, 22, the aim of performing laser irradiation is to form fine and irregular concavity and convexity on a metal surface, to thereby enhance anchor effect. Since the article to be treated is a long metal coil, even when forming any irregularities, it is considered that fine and irregular concavity and convexity is necessarily obtained.
Therefore, the invention of JP-A 10-294024 discloses an invention has the similar technical concept to the inventions of Japanese Patent No. 4020957 and JP-A 2010-167475 in which laser-irradiation is performed in the crossing directions to form a fine concavity and convexity.

### Summary of the Invention

A problem to be solved by the present invention is to provide a method of manufacturing a composite molded article including a metal molded article and a resin molded article, which can shorten a production time, which can obtain a composite molded article having an enhanced joint strength in the desired direction, and which can further enhance a joint strength of an article with a complicated shape of a joint surface.

The present invention provides, as one means for solving the problem,
a method of manufacturing a composite molded article including a metal molded article and a resin molded article, the method including steps of:
performing laser scanning on a joint surface of the metal molded article so as to form markings including straight lines and/or curved lines in a certain direction or in the different direction, and performing laser scanning so that the markings including the respective straight lines and/or the respective curved lines do not intersect with each other; and
positioning, in a die, a portion including the joint surface of the metal molded article in which the marking is formed, to thereby perform insert-molding of a resin serving as the resin molded article.
The laser scanning includes a case of performing single scanning, and a case where a plurality of scanning procedures is performed repeatedly on the same scanned mark (marking).

The present invention provides, as the other means for solving the problem,
a method of manufacturing a composite molded article including a metal molded article and a resin molded article, the method including steps of:
performing laser scanning on a joint surface of the metal molded article so as to form a desired marking pattern including straight lines and/or curved lines, and performing laser scanning so that the markings including the respective straight lines and/or the respective curved lines constituting the desired marking pattern do not intersect with each other; and
positioning, in a die, a portion including the joint surface of the metal molded article in which the marking pattern is formed, to thereby perform insert-molding of a resin serving as the resin molded article.
The laser scanning includes a case of performing single scanning, and a case where a plurality of scanning procedures is performed repeatedly on the same scanned mark (marking pattern).

According to the manufacturing method of the present invention, it is possible to shorten a production period of time by simplifying the production processes.
Furthermore, it is possible to manufacture a composite molded article having an enhanced joint strength in the desired direction in accordance with the intended use, and in addition, it is also easy to manufacture a composite molded article having a complicated joint surface.

### Brief Description of the Drawings

[Fig. 1] Fig. 1(a) is a side view (or plan view) showing a composite molded article in which each of end surfaces of a metal molded article and resin molded article are joined together, and Figs. 1 (b) and 1 (c) are plan views showing the laser scanning direction or the formed marking.
[Fig. 2] Fig. 2 (a) is a side view showing a composite molded article in which each of flat surfaces of a metal molded article and resin molded article are joined together, Fig. 2(b) is a plan view of Fig. 2(a), and Figs. 2 (c) and 2 (d) are plan views showing the laser scanning direction or the formed marking.
[Fig. 3] Fig. 3(a) is a side view showing a composite molded article of a metal rod and a resin molded article, Figs. 3(b-1) to 3(d-2) are side views showing the laser scanning direction or the formed marking.
[Fig. 4] Fig. 4(a) is a side view showing a composite molded article of a metal flat plate having convex portion and a resin flat plate, and Figs. 4(b) and 4(c) are plan views showing the laser scanning direction or the formed marking.
[Fig. 5] Figs. 5(a) to 5(f) are plan views showing marking patterns when the joint surface is quadrangular.
[Fig. 6] Figs. 6(a) and 6(b) are plan views showing marking patterns of other embodiments when the joint surface is quadrangular.
[Fig. 7] Figs. 7(a) and 7(b) are plan views showing marking patterns when the joint surface is circular.
[Fig. 8] Figs. 8(a) and 8(b) are plan views showing marking patterns when the joint surface is elliptical.
[Fig. 9] Figs. 9(a) and 9(b) are plan views showing marking patterns when the joint surface is triangular.
[Fig. 10] Fig. 10 is a plan view showing a marking pattern when the joint surface is star-shaped.
[Fig. 11] Figs. 11(a) and 11(b) are explanatory views of the laser scanning method in which a plurality of marking patterns is combined.
[Fig. 12] Fig. 12 is an explanatory view of manufacturing method (laser scanning method) of the composite molded articles in Examples 1 and 2, and Comparative Example 1.
[Fig. 13] Fig. 13 is an explanatory view of a tensile test of the composite molded articles in Examples 1 and 2, and Comparative Example 1.
[Fig. 14] Fig. 14 is an explanatory view of manufacturing method (laser scanning method) of the composite molded articles in Examples 3 to 8.
[Fig. 15] Figs. 15(a) to 15(d) are explanatory views of manufacturing method (laser scanning method) of the composite molded articles in Examples 3 to 8. In the drawings, symbols 1, 11, and 21 designate a metal molded article, symbols 1a, 11a, and 21a designate a joint surface, symbols 2, 12, and 22 designate a resin molded article, symbols 3, 13, and 23 designate a composite molded article, symbols 5, 5', 15, 15', 25, and 25' designate marking, respectively.

### Detailed Description of Invention

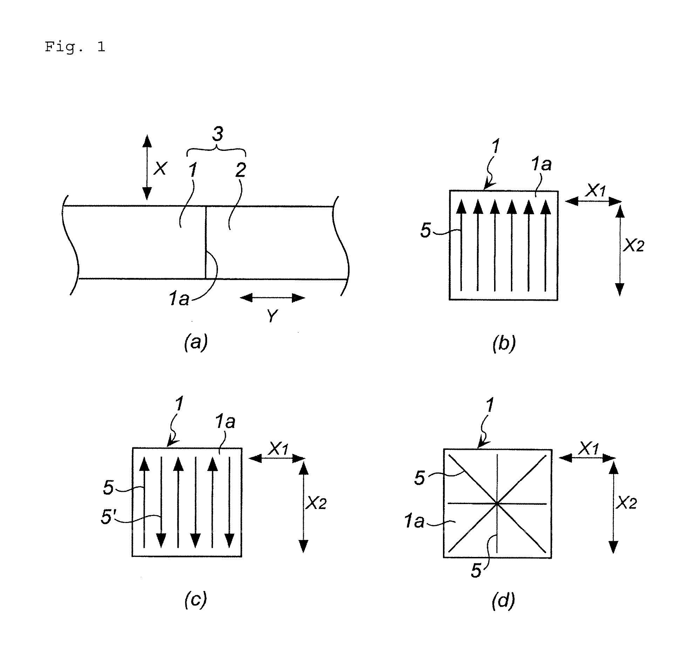

(1) Manufacturing method of the composite molded article shown in Fig. 1.
Fig. 1(a) shows a side view of a composite molded article 3, in which an end surface 1a of a metal flat plate 1 (or a metal square bar or a metal round bar) and a resin molded article 2 are joined and integrated together.

### <Figs. 1(a) and 1(b)>

The manufacturing method of the composite molded article 3 shown in Figs. 1(a) and 1(b) is as follows. Fig. 1 (a) is a side view (or plan view), and Fig. 1 (b) shows a state of marking (marking direction) on the joint surface.

First, the laser scanning is performed on the end surface (joint part) 1a of the metal flat plate 1 before the joining and integration so as to form the marking 5 of continuous or discontinuous straight line in only one direction (direction of arrow illustrated on the marking 5 in Fig. 1(b)), as shown in Fig. 1(b). Note that the arrow (arrowhead portion) indicates the scanning direction, and the actual scanning portion is the straight line portion but scanning is not performed along the arrowhead. The same applies to the following other embodiments.
Here, the laser scanning so as to form the marking 5 of discontinuous straight line means laser scanning so as to form a marking 5 of straight line (broken line) by combining many dot-like markings. The same applies to the following other embodiment.
Since the scanning direction is only one, instead of the direction of Fig. 1 (b), scanning may be performed only in the direction perpendicular to the direction of Fig. 1 (b) or only in an oblique direction.
At this time, the laser scanning can also be performed repeatedly a plurality of times on the same marking 5. By increasing the number of laser scanning procedures to the same marking 5, a joint strength can be enhanced.

The laser scanning can, as shown in Fig. 1(b), form a plurality of the markings 5 at intervals. At this time, since all markings 5 are arrayed in the same direction (namely, all laser scanning directions are the same) and each of the markings is a straight line, they do not intersect with each other.

### <Figs. 1(a) and 1(c)>

The manufacturing method of the composite molded article 3 shown in Figs. 1 (a) and 1 (c) is as follows. Fig. 1(a) is a side view (or plan view), and Fig. 1 (c) shows a state of marking (marking direction) on the joint surface.

In the first scanning process, the laser scanning is performed on the joint surface 1a of the metal molded article 1, so as to form the marking 5 of continuous or discontinuous straight line in only one particular direction (direction of arrow illustrated on the marking 5 in Fig. 1(c)).

In the second scanning process, the laser scanning is performed so as to form the marking 5' of continuous or discontinuous straight line in the direction opposite to the particular direction by 180 degrees (direction with which the scanning direction in the first scanning process does not intersect, and the arrow direction illustrated on the marking 5' in Fig. 1(c)). The markings 5 and 5' are straight lines being parallel to each other.
By performing scanning reciprocally so that the scanning direction is changed reversely by 180 degrees, a scanning time can be shortened in the case where the same number of markings 5 is formed in comparison with the case where the markings are formed in the same direction.

When the laser scanning is performed as shown in Figs. 1 (b) and 1(c) (when the marking 5 or the markings 5, 5' are formed), the joint strength (for example, shearing stress) in the X direction shown in Fig. 1(a) (in Figs. 1(b) and 1(c), the X1 direction or the X2 direction) is increased in comparison with the joint strength (for example, tensile strength) in the Y direction (axial direction) in Fig. 1(a). With respect to the shearing stresses in the X1 or X2 direction in Figs. 1(b) and 1(c), the shearing stress in the X2 direction along the marking direction becomes larger.

### <Figs. 1(a) and 1(d)>

The manufacturing method of the composite molded article 3 shown in Figs. 1(a) and 1(d) is as follows. Fig. 1(a) is a side view (or plan view), and Fig. 1(d) shows a state of marking on the joint surface.

The laser scanning is performed on the end surface (joint surface) 1a of the metal flat plate 1 before the joining and integration, so as to form the radial marking 5 passing through the center point of the joint surface 1a, as shown in Fig. 1(d). At this time, a marking 5 including eight straight lines extended from the center point may be formed, or a marking 5 including four straight lines passing through the center point may be formed.
The marking 5 formed by this method intersects at one point, but does not intersect at two or more points.

When the laser scanning is performed as shown in Fig. 1(d) (when the marking 5 is formed), the joint strength (for example, shearing stress) in the X direction shown in Fig. 1 (a) (in Fig. 1(d), the X1 direction or the X2 direction) is increased in comparison with the shearing stress in the Y direction shown in Fig. 1(a). The shearing stresses in the X1 and X2 direction in Fig. 1(d) are the same.

In Figs. 1(b), 1(c), and 1(d), the interval, length and number of the markings 5 or markings 5, 5' are optionally determined depending on the sizes, masses, types, furthermore required joint strengths, and the like of the metal flat plate 1 and the resin flat plate 2, to be joined.

The composite molded article 3 shown in Fig. 1 is obtained by joining the metal flat plate 1 to the resin flat plate 2 on one surface, and after the laser scanning is performed on two surfaces of the metal flat plate 1, it is possible to perform the insert-molding so that the two surfaces of the metal flat plate 1 can be joined to the resin.
In addition, when using metal rod having a polygonal (e.g. hexagonal) cross-section, by performing the laser scanning on a part or the whole of 1 to 6 surfaces, the metal molded article can be joined to one or more resin molded articles.

Next, there is positioned, in a die, the portion which includes the joint surface 1a of the metal molded article 1 in which the laser scanning is performed, and a thermoplastic resin or a thermosetting resin (prepolymer) serving as the resin molded article 2 is subjected to insert-molding. Note that, when using the thermosetting resin (prepolymer), post-curing treatment is performed.
The insert-molding method is not particularly limited, and there can be employed a method in which a molten thermoplastic resin or thermosetting resin (prepolymer) is injected into the die, or a method in which the metal molded article 1 and the resin molded article 2 are hot-pressed, and the like.

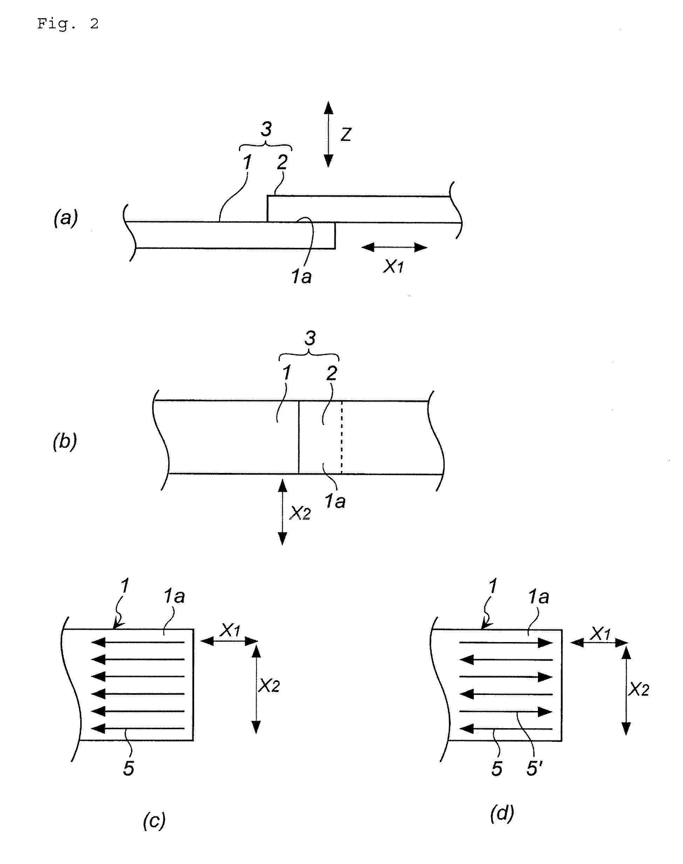

(2) Manufacturing method of the composite molded article shown in Fig. 2.
Fig. 2 (a) shows a side view of a composite molded article 3 in which a flat surface 1a of a metal flat plate 1 (or a metal square bar) and a flat surface of a resin molded article 2 are joined and integrated together.

### <Figs. 2(a), 2(b), and 2(c)>

The manufacturing method of the composite molded article 3 shown in Figs. 2(a), 2(b), and 2 (c) is as follows. Fig. 2 (a) is a side view of the composite molded article 3, Fig. 2 (b) is a plan view of Fig. 2 (a), and Fig. 2 (c) shows a state of marking (marking direction) on the joint surface 1a.
With respect to the composite molded article 3 of Figs. 2 (a) and 2(b), in the same way as the composite molded article 3 of Fig. 1(a), the laser scanning is performed on the flat surface (joint surface) 1a of the metal flat plate 1 before the joining and integration, so as to form the marking 5 of continuous or discontinuous straight line in only one direction (direction of arrow illustrated on the marking 5 in Fig. 1(c)), as shown in Fig. 1(c).

The laser scanning can, as shown in Fig. 1(c), form a plurality of the markings 5 at intervals. At this time, since all markings 5 (namely, all laser scanning directions) are arrayed in the same direction and each of the markings is a straight line, they do not intersect with each other.

### < Figs. 2(a), 2(b), and 2(d)>

The manufacturing method of the composite molded article 3 shown in Figs. 2 (a), 2(b), and 2 (d) is as follows. Fig. 2 (a) is a side view of the composite molded article 3, Fig. 2 (b) is a plan view of Fig. 2 (a), and Fig. 2 (d) shows a state of marking (marking direction) on the joint surface 1a.
In the first scanning process, the laser scanning is performed on the joint surface 1a of the metal molded article 1, so as to form the marking 5 of continuous or discontinuous straight lines in only one particular direction (direction of arrow illustrated on the marking 5 in Fig. 2(d)).

In the second scanning process, the laser scanning is performed so as to form the marking 5' of continuous or discontinuous straight line in the direction opposite to the particular direction by 180 degrees (direction with which the scanning direction in the first scanning process does not intersect, and the arrow direction illustrated on the marking 5' in Fig. 2(d)).
By performing scanning reciprocally so that the scanning direction is changed reversely by 180 degrees, a scanning time can be shortened in the case where the same number of markings 5, 5' is formed in comparison with the case where the markings are formed in the same direction.

Note that in the embodiment of Figs. 2(a) to 2(d), there can be formed the radial markings 5 shown in Fig. 1(d).

When the laser scanning is performed as shown in Figs. 2 (c) and 2 (d) (when the marking 5 or the markings 5, 5' are formed), the joint strength (for example, shearing stress) in the X1 direction (longitudinal direction) shown in Fig. 2(a) and in the X2 direction (width direction) in Fig. 2 (b) is increased in comparison with the joint strength (for example, tensile strength) in the Z direction (thickness direction) in Fig. 2(a). Note that as to the shearing stresses in the X1 or X2 direction in Figs. 2 (c) and 2(d), the shearing stress in the X1 direction along the marking direction becomes larger.
In Figs. 2(c) and 2(d), the distance, length and number of the markings 5 or markings 5, 5' are optionally determined depending on the sizes, masses, types, furthermore required joint strengths, and the like of the metal flat plate 1 and the resin flat plate 2, to be joined.

The composite molded article 3 shown in Figs. 2 (a) and 2 (b) is obtained by joining the metal flat plate 1 to the resin flat plate 2 on one surface, and after the laser scanning is performed on two surfaces of the metal flat plate 1, it is possible to perform the insert-molding so that the two surfaces of the metal flat plate 1 can be joined to the resin.
In addition, when using metal rod having a polygonal (e.g. hexagonal) cross-section, by performing the laser scanning on a part or the whole of 1 to 6 surfaces, the metal molded article can be joined to one or more resin molded articles.

Next, there is positioned, in a die, the portion which includes the joint surface 1a of the metal molded article 1 in which the laser scanning is performed, and a thermoplastic resin or a thermosetting resin (prepolymer) serving as the resin molded article 2 is subjected to insert-molding. Note that, when using the thermosetting resin (prepolymer), post-curing treatment is performed.
The insert-molding method is not particularly limited, and there can be employed a method in which a molten thermoplastic resin or thermosetting resin (prepolymer) is injected into the die, or a method in which the metal molded article 1 and the resin molded article 2 are hot-pressed, and the like.

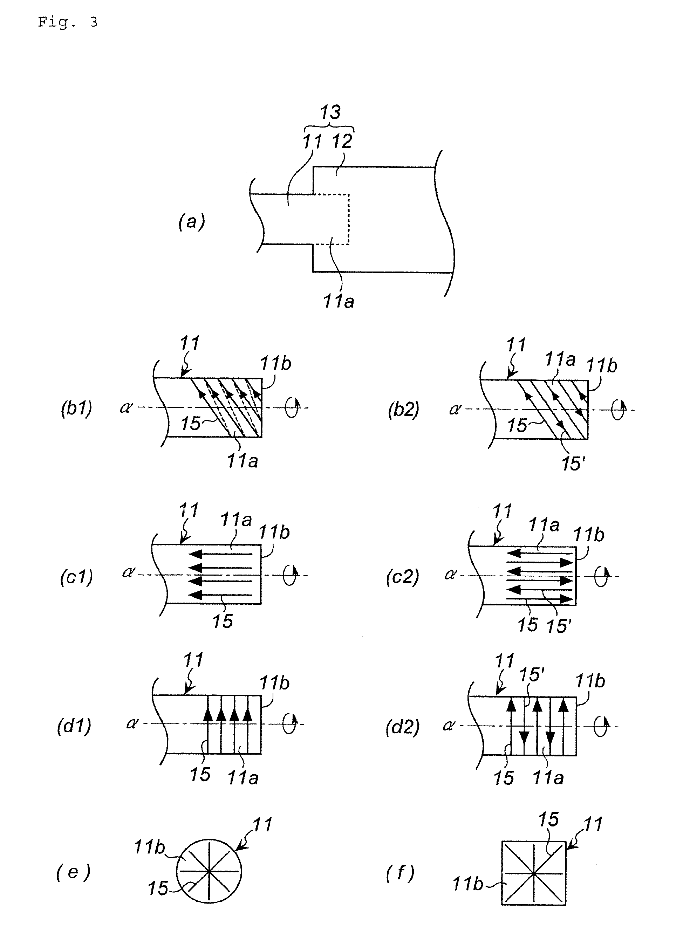

(3) Manufacturing method of the composite molded article shown in Fig. 3.
Fig. 3 (a) is a side view of a composite molded article 13 in which a peripheral surface 11a at one end of a metal rod 11 (polygonal rod having, in a width direction, a cross-sectional shape of circle, ellipse, triangle, square, hexagon, and the like) and a resin molded article 12 are joined and integrated together.
The composite molded article 13 is joined and integrated in a state where the peripheral surface 11a at one end of a metal rod 11 is enclosed by the resin (namely, a state where the peripheral surface 11a at one end of a metal rod 11 is embedded in the resin molded article 12).

### <Figs. 3(a), 3(b1) and 3(b2)>

The manufacturing method of the composite molded article 13 shown in Figs. 3(a) and 3(b1) is as follows.
The laser scanning is performed on the end peripheral surface (joint surface) 11a of the metal rod 11 before the joining and integration, so as to form the continuous or discontinuous spiral marking 15 in only the arrow direction of the marking 15, as shown in Fig. 3(b1).
Here, the laser scanning so as to form the discontinuous spiral marking 15 means laser scanning so as to form a spiral line by combining many dot-like markings. Because of the spiral line, the markings do not intersect with each other. The same applies to the following other embodiment.
When the laser scanning is performed as shown in Fig. 3(b1) (when the marking 15 is formed), the joint strength (joint strength in the reverse direction is increased) in the direction of rotation around an α axis of the metal rod 11 (in the arrow direction or reverse direction in Fig. 3(b1)) and the joint strength (tensile strength) to the α axis direction can be increased.

The manufacturing method of the composite molded article 13 shown in Figs. 3(a) and 3(b2) is as follows.
In the first scanning process, the laser scanning is performed on the joint surface 11a of the metal rod 11 before the joining and integration, so as to form the continuous or discontinuous spiral marking 15 in only one particular direction (the arrow direction illustrated on the marking 15 in Fig. 3(b2)).
In the second scanning process, the laser scanning is performed so as to form the continuous or discontinuous spiral marking 15' in the direction opposite to the particular direction in the first scanning process, by 180 degrees (direction with which the scanning direction in the first scanning process does not intersect, and the arrow direction illustrated on the marking 15' in Fig. 3(b2)).
By performing scanning reciprocally so that the scanning direction is changed reversely by 180 degrees, a scanning time can be shortened in the case where the same number of markings is formed in comparison with the case where the markings are formed in the same direction.

When the laser scanning is performed in a spiral manner as shown in Fig. 3 (b2) (when the marking 15 is formed), the joint strength (joint strength in the reverse direction is increased) to the direction of rotation around an α axis of the metal rod 11 (in the arrow direction or reverse direction in Fig. 3(b2)) and the joint strength (tensile strength) in the α axis direction can be increased.

When applying the joining method shown in Figs. 3(b1) and 3 (b2), the manufacturing method of the composite molded article 13 is suitable as a manufacturing method of a part (composite molded article) that requires a high strength in the direction of rotation around an α axis, for example, a part such as a motor part or piston.

### <Figs. 3(a) and 3(cl)>

The manufacturing method of the composite molded article 13 shown in Figs. 3(a) and 3(c1) is as follows.
The laser scanning is performed on the end peripheral surface (joint surface) 11a of the metal rod 11 before the joining and integration so as to form the continuous or discontinuous straight line marking 15 in only the arrow direction of the marking 15, as shown in Fig. 3(cl). At this time, the scanning can be performed on only a part of the end peripheral surface (joint surface) 11a, or on the whole peripheral surface.

The laser scanning can, as shown in Fig. 3(c1), form a plurality of the markings 15 at intervals. At this time, since all markings 15 (namely, all laser scanning directions) are arrayed in the same direction and each of the markings is a straight line, they do not intersect with each other.

### <Figs. 3(a) and 3(c2)>

The manufacturing method of the composite molded article 13 shown in Figs. 3(a) and 3(c2) is as follows.
In the first scanning process, the laser scanning is performed on the joint surface 11a of the metal rod 11 before the joining and integration, so as to form the continuous or discontinuous straight line marking 15 in only one particular direction (direction of arrow illustrated on the marking 15 in Fig. 3(c2)).
In the second scanning process, the laser scanning is performed so as to form the continuous or discontinuous straight line marking 15' in the direction opposite to the particular direction in the first scanning process, by 180 degrees (direction of not intersecting with the scanning direction in the first scanning process, and the arrow direction illustrated on the marking 15' in Fig. 3(c2)).
At this time, the scanning can be performed on only a part of the end peripheral surface (joint surface) 11a, or on the whole peripheral surface.
As described above, by performing scanning reciprocally so that the scanning direction is changed reversely by 180 degrees, a scanning time can be shortened in the case where the same number of markings is formed, in comparison with the case where the markings are formed in the same direction.

When the laser scanning is performed as shown in Figs. 3(c1) and 3(c2) (when the marking 15 or 15' is formed), the joint strength in the forward and reverse direction of rotation around an α axis of the metal rod 11 can be particularly increased.
Therefore, the manufacturing method of the composite molded article 13 is suitable as a manufacturing method of a part (composite molded article) that requires a high strength in the direction of rotation around an α axis, for example, a motor part.

### <Figs. 3(a) and 3(d1)>

The manufacturing method of the composite molded article 13 shown in Figs. 3(a) and 3(d1) is as follows.
The manufacturing method of the composite molded article 13 is an embodiment in which the laser scanning is performed, in a plurality of continuous or discontinuous circular patterns, on the end peripheral surface (joint surface) 11a of the metal rod 11 before the joining and integration, at intervals only in the arrow direction of the markings 15, as shown in Fig. 3(d1). Here, a discontinuous circular pattern means performing laser scanning so as to form a circular line by combining many dot-like markings. Because of the circular line, the markings do not intersect with each other. The same applies to the following other embodiments.

### <Figs. 3(a) and 3(d2)>

The manufacturing method of the composite molded article 13 shown in Figs. 3(a) and 3(d2) is as follows.
In the first scanning process, the laser scanning is performed on the joint surface 11a of the metal rod 11 before the joining and integration, so as to form the continuous or discontinuous circular marking 15 in only one particular direction (arrow direction illustrated on the marking 15 in Fig. 3(d2)).

In the second scanning process, the laser scanning is performed so as to form the circular marking 15' continuously or discontinuously in the direction opposite to the particular direction in the first scanning process, by 180 degrees (direction with which the scanning direction in the first scanning process does not intersect, and the arrow direction illustrated on the marking 15' in Fig. 3(d2)).

When the laser scanning is performed in a circular manner as shown in Figs. 3(d1) and 3(d2) (when the marking 15 or the marking 15, 15' is formed), the joint strength (tensile strength) in the direction of an α axis of the metal rod 11 can be particularly increased. Note that, in Figs. 3(d1) and 3 (d2), scanning may be performed so as to form a circular pattern in an oblique direction, as shown in Figs. 3(b1) and 3(b2).
Therefore, the manufacturing method of the composite molded article 13 is suitable as a manufacturing method of a part (composite molded article) that requires a high tensile strength in the α axial direction, for example, a part such as piston.

In Figs. 3(a), 3(b1) to 3(d2), the laser scanning can also be performed repeatedly a plurality of times on the same marking15 or 15'. By increasing the number of laser scanning procedures to the same marking 15 or 15', a joint strength can be enhanced.

The laser scanning can, as shown in Figs. 3(b1) to 3(d2), form a plurality of the markings 15, 15' at intervals. At this time, the distance, length and number of the markings 15, 15' are optionally determined depending on the sizes, masses, types, furthermore required joint strengths, and the like of the metal rod 11 and the resin molded article 12, to be joined.

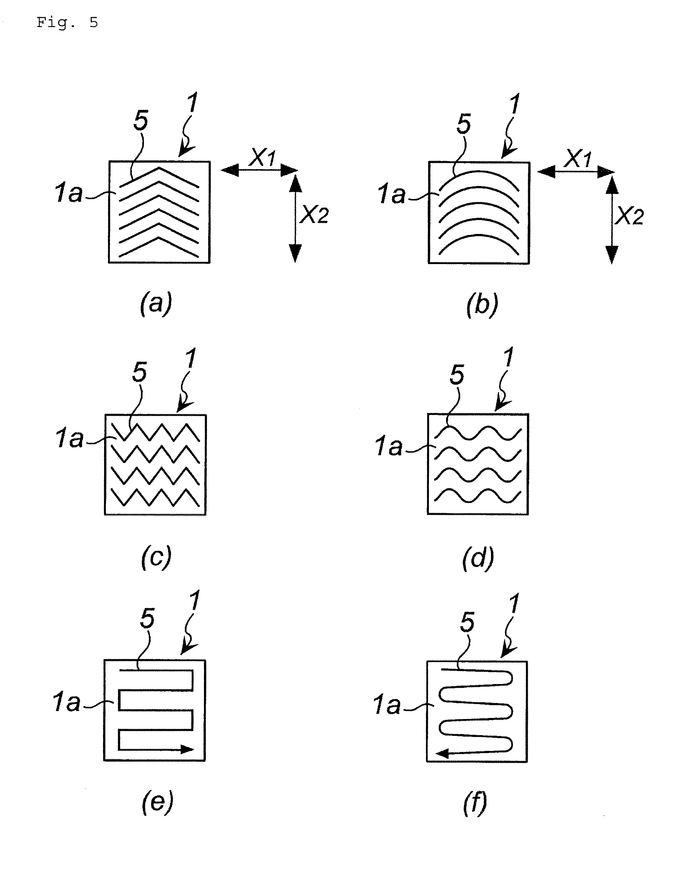

In Figs. 3(b1) to 3(d2), the laser scanning can be performed only on the peripheral surface (joint surface) 11a of one end of the metal rod 11, and laser scanning can also be performed on the end surface 11b of the metal rod 11 instead of the peripheral surface 11a of the one end or in addition to the peripheral surface 11a of the one end.
When performing the laser scanning on the end surface 11b of the metal rod 11, the scanning may be performed so as to form the marking 15, or 15' as shown in Fig. 1(c), and also may be performed so as to form the radial marking 15 passing through the center point of the end surface 11b as shown in Figs. 3(e) and 3(f), and furthermore may be performed so as to form the marking shown in Figs. 5(a) to 5(f), Figs. 6 (a) and 6(b), Figs. 7(a) and 7(b), Figs. 8(a) and 8(b), and Figs. 9(a) and 9(b).
The marking 15 shown in Figs. 3(e) and 3(f) intersects at one point, but does not intersect at two or more points.

Next, there is positioned, in a die, the portion which includes the joint surface 11a of the metal rod 11 in which the laser scanning is performed, and a thermoplastic resin or a thermosetting resin (prepolymer) serving as the resin molded article 2 is subjected to insert-molding. Note that, when using the thermosetting resin (prepolymer), post-curing treatment is performed.
The insert-molding method is not particularly limited, and there can be employed a method in which a molten thermoplastic resin or thermosetting resin (prepolymer) is injected into the die, or a method in which the metal molded article 11 and the resin molded article are hot-pressed, and the like.

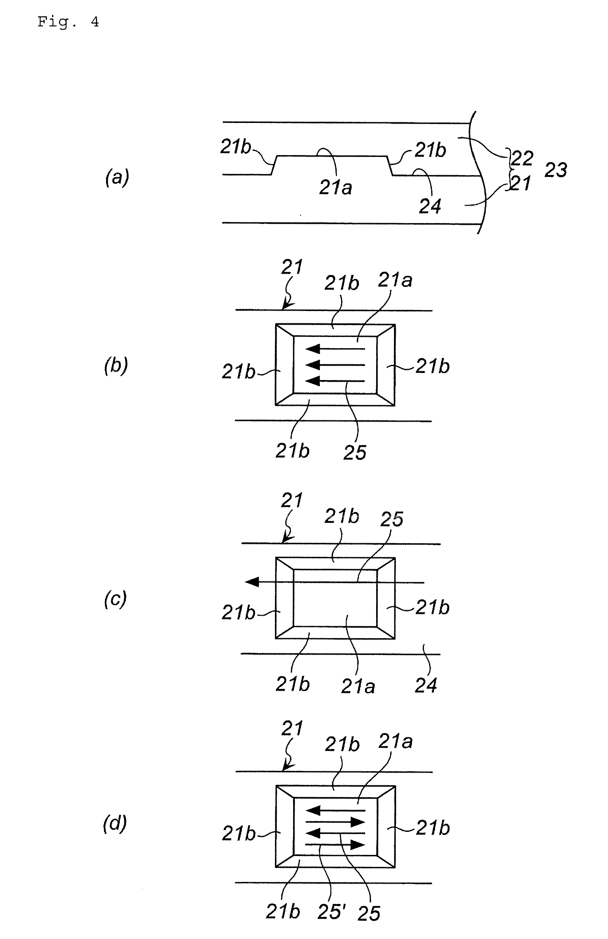

(4) Manufacturing method of the composite molded article shown in Fig. 4.
Fig. 4 (a) shows a side view of a composite molded article 23 of a metal plate 21 having convex portion on its surface and a resin molded article 22. The convex portion is formed of a flat surface 21a and four inclined surfaces (or may be vertical surfaces) 21b.

### <Figs. 4(a) and 4(b)>

The manufacturing method of the composite molded article 23 shown in Figs. 4(a) and 4(b) is as follows.
First, the laser scanning is performed on the flat surface (joint part) 21a of the metal plate 21 before the joining and integration, so as to form the marking 25 of continuous or discontinuous straight line in only one direction (direction of arrow illustrated on the marking 25 in Fig. 4(b)), as shown in Fig. 4(b).
In addition, as shown in Fig. 4 (c), the laser scanning may be performed not only on the flat surface 21a, but also on a part or the whole of the four inclined surfaces 21b, if necessary, on the flat surface 24 around the convex portion.
Since the scanning direction is only one, the scanning may be performed only in the direction perpendicular to the direction of Fig. 4(b) or only in the oblique direction.
At this time, the laser scanning can also be performed repeatedly a plurality of times on the same marking 25. By increasing the number of laser scanning procedures to the same marking 25, a joint strength can be enhanced.

The laser scanning can, as shown in Fig. 4 (b), form a plurality of the markings 25 at intervals. At this time, since all markings 25 are arrayed in the same direction (namely, all laser scanning directions are the same) and each of the markings is a straight line, they do not intersect with each other.

### <Figs. 4(a) and 4(d)>

The manufacturing method of the composite molded article 23 shown in Figs. 4(a) and 4(d) is as follows.
In the first scanning process, the laser scanning is performed on the joint surface 21a of the metal molded article 21, so as to form the marking 25 of continuous or discontinuous straight line in only one particular direction (direction of arrow illustrated on the marking 25 in Fig. 4(d)).

In the second scanning process, the laser scanning is performed so as to form the marking 25' of continuous or discontinuous straight line in the direction opposite to the particular direction in the first scanning process, by 180 degrees (direction with which the scanning direction in the first scanning process does not intersect, and the arrow direction illustrated on the marking 25' in Fig. 4(d)).
In addition, as shown in Fig. 4 (c), the laser scanning may be performed not only on the flat surface 21a, but also on a part or the whole of the four inclined surfaces 21b, if necessary, on the flat surface 24 around the convex portion.
Since the scanning direction is only one, the scanning may be performed only in the direction perpendicular to the direction of Fig. 4(d) or only in the oblique direction.
As described above, by performing scanning reciprocally so that the scanning direction is changed reversely by 180 degrees, a scanning time can be shortened in the case where the same number of markings is formed, in comparison with the case where the markings are formed in the same direction.

The interval, length and number of the markings 25 or markings 25 and 25' are optionally determined depending on the sizes, masses, types, furthermore required joint strengths, and the like of the metal plate 21 and the resin flat plate 2, to be joined.

Next, there is positioned, in a die, the portion which includes the joint surface 21a of the metal molded article 21 in which the laser scanning is performed, and a thermoplastic resin or a thermosetting resin (prepolymer) serving as the resin molded article 22 is subjected to insert-molding. Note that, when using the thermosetting resin (prepolymer), post-curing treatment is performed.
The insert-molding method is not particularly limited, and there can be employed a method in which a molten thermoplastic resin or thermosetting resin (prepolymer) is injected into the die, or a method in which the metal molded article 21 and the resin molded article 22 are hot-pressed, and the like.

In the embodiments shown in Fig. 1 to Fig. 4, the scanning can also be performed so as to form a marking including a narrow zigzag line or a narrow waved line (namely curved line) instead of the straight line.

(5) Forming method of desired marking patterns shown in Fig. 5(a) to Fig. 10
In the manufacturing method of the composite molded article of the present invention, depending on a shape of the joint surface of the metal molded article to be joined, a desired marking pattern can be formed in the laser scanning process.
This marking pattern is formed, depending on a shape of the joint surface of the metal molded article so that a joint strength having the desired strength to the whole or a part of the joint surface can be obtained in the desired direction.

### <Figs. 5(a) to 5(f)>

Although Figs. 5(a) to 5(f) show an embodiment in which the joint surface of the metal molded article is quadrangular, they are also applicable to joint surfaces having the other shapes such as circular, ellipse, and other polygonal shapes.

In Fig. 5 (a), there is formed a marking pattern 5 in a state where there is arranged a plurality of polygonal lines (inverted V-shaped line in the drawing) that is projected in the X2 direction with respect to the joint surface 1a of the metal molded article 1.
In the case of the marking pattern 5 of Fig. 5 (a), a shearing stress in the X1 and X2 directions, particularly a shearing stress in the X2 direction can be enhanced.
Note that, in the following explanation of Figs. 5(a) to 5(f), the X1, X2 directions are on the basis of the directions X1, X2 shown in Fig. 5(a).

In Fig. 5(b), there is formed a marking pattern 5 in a state where there is arranged a plurality of curved lines (line forming an arch) are projected in the X2 direction with respect to the joint surface 1a of the metal molded article 1.
In the case of the marking pattern 5 of Fig. 5 (b), a shearing stress in the X1 and X2 directions, particularly a shearing stress in the X2 direction can be enhanced.

Fig. 5(c) is a modification of Fig. 5(a), and there is formed a marking pattern 5 in a state where there is arranged a plurality of several zigzag lines.
In the case of the marking pattern 5 of Fig. 5(c), there can be obtained a uniform joining force (shearing stress) having no directional dependency in every direction in the surface including the X1 and X2 directions.

Fig. 5 (d) is a modification of Fig. 5 (b), and there is formed a marking pattern 5 in a state where there is arranged a plurality of several waved lines is arranged.
In the case of the marking pattern 5 of Fig. 5 (d), there can be obtained a uniform joining force (shearing stress) having no directional dependency in every direction in the surface including the X1 and X2 directions.

In Fig. 5 (e), there is formed a marking pattern 5 in a state where one continuous curved line forms a waved line as a whole.
In the case of the marking pattern 5 of Fig. 5(e), there can be obtained a uniform joining force (shearing stress) having no directional dependency in every direction in the surface including the X1 and X2 directions.

In Fig. 5(f), the marking pattern 5 of Fig. 5(e) is formed by using a straight line.
In the case of the marking pattern 5 of Fig. 5(f), there can be obtained a uniform joining force (shearing stress) having no directional dependency in every direction in the surface including the X1 and X2 directions.
The marking patterns 5 of Figs. 5(a) to 5(f) are formed so that, in any case, the respective straight lines or curved lines do not intersect with each other.

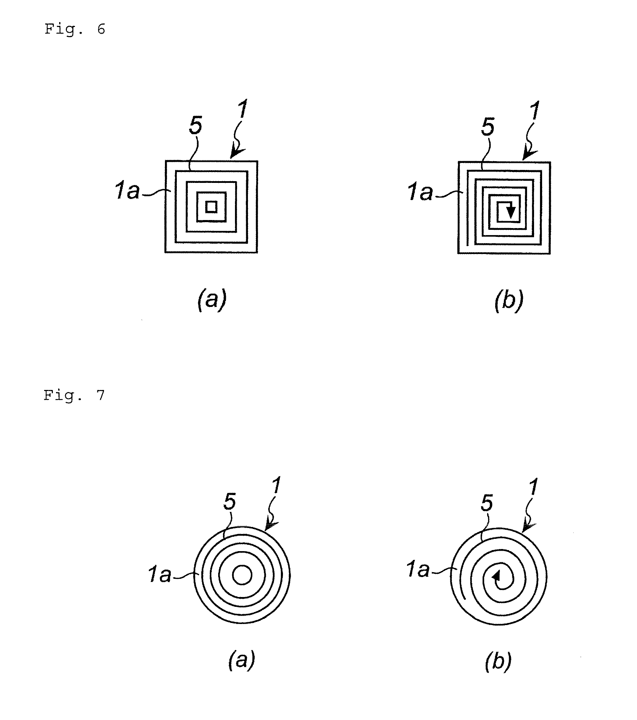

### <Figs. 6(a) and 6(b)>

Figs. 6(a) and 6 (b) show an embodiment in which the joint surface of the metal molded article is quadrangular.
In Fig. 6(a), there is formed, with respect to the joint surface 1a of the metal molded article 1, a marking pattern 5 so that there is formed a plurality of figures (quadrangle) having the same figure (quadrangle) as that of the joint surface 1a, having the same center point, and having different sizes.

In Fig. 6(b), there is formed, with respect to the joint surface 1a of the metal molded article 1, a marking pattern 5 so that there is formed a spiral on the basis of the center point of the joint surface 1a.
Note that, in addition to Figs. 6 (a) and 6(b), the marking pattern 15 shown in Fig. 1(d), the marking pattern 5 shown in Fig. 3(f) can also be formed.

When forming the marking patterns 5 of Figs. 6 (a) and 6(b), a shearing stress can be increased in all directions including the X1 and X2 directions shown in Fig. 5.
The marking patterns 5 of Figs. 6(a) and 6(b) are formed so that, in any case, the respective straight lines do not intersect with each other.

### <Figs. 7(a) and 7(b)>

Figs. 7 (a) and 7(b) show an embodiment in which the joint surface of the metal molded article is circular.
In Fig. 7 (a), there is formed, with respect to the joint surface 1a of the metal molded article 1, a marking pattern 5 so that there is formed a plurality of figures (circle) having the same figure (i.e. concentric circle) as that of the joint surface 1a, having the same center point, and having different sizes.

In Fig. 7(b), there is formed, with respect to the joint surface 1a of the metal molded article 1, a marking pattern 5 so that there is formed a spiral on the basis of the center point of the joint surface 1a.
The center point is a center of area or a center of a gravity center. In the case of Figs. 7(a) and 7(b) where the joint surface 1a is circular, the center of area is preferably set to the center point, and in the case where the joint surface 1a has an indefinite shape, the gravity center can be set to the center point.
Note that, in addition to Figs. 7 (a) and 7 (b), the marking pattern 15 shown in Fig. 3(e) can also be formed.

When forming the marking patterns 5 of Figs. 7 (a) and 7(b), a shearing stress can be increased in all directions including the X1 and X2 directions shown in Fig. 5.
The marking patterns 5 of Figs. 7(a) and 7(b) are formed so that, in any case, the respective straight lines do not intersect with each other.

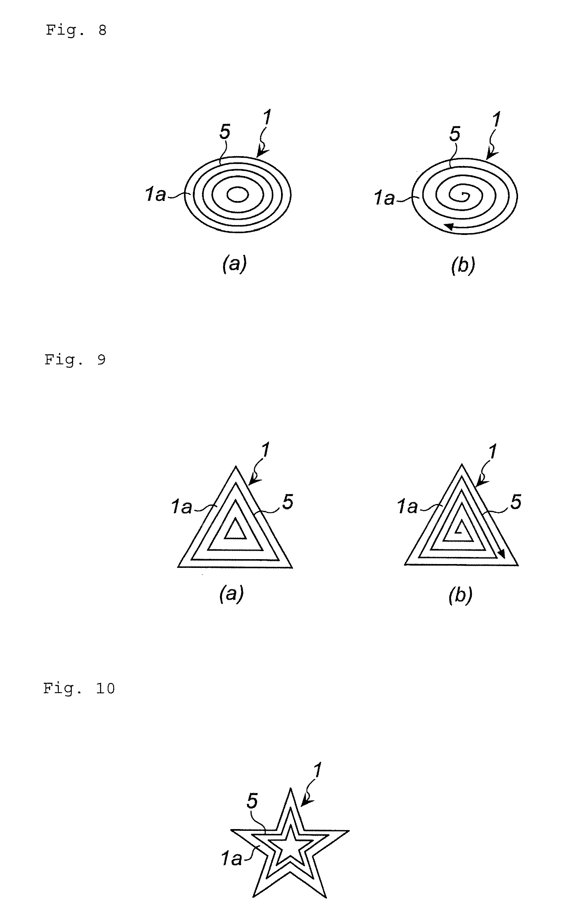

### <Figs. 8(a) and 8(b)>

Figs. 8 (a) and 8(b) show an embodiment in which the joint surface of the metal molded article is elliptical.
In Fig. 8(a), there is formed, with respect to the joint surface 1a of the metal molded article 1, a marking pattern 5 so that there is formed a plurality of figures (ellipse) having the same figure (ellipse) as that of the joint surface 1a, having the same center point, and having different sizes.

In Fig. 8(b), there is formed, with respect to the joint surface 1a of the metal molded article 1, a marking pattern 5 so that there is formed a spiral on the basis of the center point of the joint surface 1a.
Note that, in addition to Figs. 8 (a) and 8 (b), the marking pattern 15 shown in Fig. 3(e) can also be utilized.

When forming the marking patterns 5 of Figs. 8(a) and 8(b), a shearing stress can be increased in all directions including the X1 and X2 directions shown in Fig. 5.
The marking patterns 5 of Figs. 8(a) and 8(b) are formed so that, in any case, the respective straight lines do not intersect with each other.

### <Figs. 9(a) and 9(b)>

Fig. 9(a) and 9(b) show an embodiment in which the joint surface of the metal molded article is triangular.
In Fig. 9(a), there is formed, with respect to the joint surface 1a of the metal molded article 1, a marking pattern 5 so that there is formed a plurality of figures (triangle) having the same figure (triangle) as that of the joint surface 1a, having the same center point, and having different sizes.

In Fig. 9(b), there is formed, with respect to the joint surface 1a of the metal molded article 1, a marking pattern 5 so that there is formed a spiral on the basis of the center point of the joint surface 1a.
Note that, in addition to Figs. 9 (a) and 9 (b), the marking pattern 15 of Fig. 3(f) can also be utilized.

When forming the marking patterns 5 of Figs. 9(a) and 9(b), a shearing stress can be increased in all directions including the X1 and X2 directions shown in Fig. 5.
The marking patterns 5 of Figs. 9(a) and 9(b) are formed so that, in any case, the respective straight lines do not intersect with each other.

Fig. 10 shows an embodiment in which the joint surface of the metal molded article is star-shaped.
In Fig. 10, there is formed, with respect to the joint surface 1a of the metal molded article 1, a marking pattern 5 so that there is formed a plurality of figures (star shape) having the same figure (star shape) as that of the joint surface 1a, having the same center point, and having different sizes.

When forming the marking pattern 5 of Fig. 10, a shearing stress can be increased in all directions including the X1 and X2 directions shown in Fig. 5.
The marking pattern 5 of Fig. 10 is formed so that, in any case, the respective straight lines do not intersect with each other.

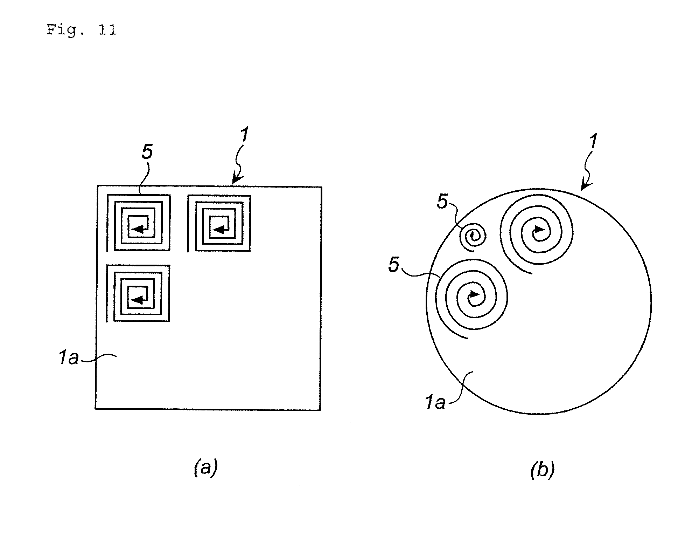

(6) Desired making patterns shown in Fig. 11.
Fig. 11 (a) shows an embodiment in which, in the case where the joint surface 1a of the metal molded article 1 is quadrangular, a plurality of the marking patterns 5 shown in Fig. 6(b) is formed by the combination.
Fig. 11 (b) shows an embodiment in which, in the case where the joint surface 1a of the metal molded article 1 is circular, a plurality of the marking patterns 5 having different sizes shown in Fig. 7(b) is formed by the combination.

On even one joint surface of the metal molded article, depending on the shape of the joint surface, a desired marking pattern can be formed by combining the marking pattern 5 having the same size or different size shown in Figs. 5 to Fin.10, and furthermore other marking patterns.
As described above, by combining different marking patterns, it becomes easy to manufacture a composite molded article having a high joint strength in a desired direction.

There is not particularly limited the metal to which the manufacturing method of the composite molded article according to the present invention is applied, and the metal can be optionally selected from known metals depending on the intended use. Examples include a metal selected from iron, various stainless steels, aluminum or alloy thereof, copper, magnesium and alloy containing those metals.

As the resin to which the manufacturing method of the composite molded article according to the present invention is applied, there is included a thermoplastic elastomer in addition to a thermoplastic resin and a thermosetting resin.

The thermoplastic resin can be optionally selected, depending on the intended use, from known thermoplastic resins. Examples thereof include polyamide-based resin (aliphatic polyamide and aromatic polyamide such as PA6 or PA66); a copolymer containing styrene unit such as polystyrene, ABS resin, or AS resin; polyethylene; a copolymer containing ethylene unit; polypropylene; copolymers containing propylene; other polyolefins; poly(vinyl chloride); polyvinylidene chloride; polycarbonate-based resin; acrylic-based resin; methacrylate-based resin; polyester-based resin; poly-acetal resin; and polyphenylene sulfide-based resin.

The thermosetting resin can be optionally selected, depending on the intended use, from known thermosetting resins. Examples thereof include urea resin, melamine resin, phenol resin, resorcinol resin, epoxy resin, polyurethane, vinyl urethane, and the like.

The thermoplastic elastomer can be optionally selected, depending on the intended use, from known thermoplastic elastomers. Examples thereof include a styrene-based elastomer, a vinyl chloride-based elastomer, an olefin-based elastomer, a urethane-based elastomer, a polyester-based elastomer, a nitryl-based elastomer, a polyamide-based elastomer, and the like.

With these thermoplastic resins, thermosetting resins, and thermoplastic elastomers, known fibrous filler can be blended.
Examples of the known fibrous filler can include carbon fibers, inorganic fibers, metallic fibers, organic fibers, and the like.
The carbon fibers are well known, and there can be used PAN-based fibers, pitch-based fibers, rayon-based fibers, lignin-based fibers, and the like.
Examples of the inorganic fibers include glass fibers, basaltic fibers, silica fibers, silica-alumina fibers, zirconia fibers, boron nitride fibers, silicon nitride fibers, and the like.
Examples of the metallic fibers include fibers including stainless steel, aluminum, copper, and the like.
As the organic fibers, there can be used polyamide fibers (whole aromatic polyamide fibers, semi-aromatic polyamide fibers in which any one of diamine and dicarboxylic acid is aromatic compound, aliphatic polyamide fibers), polyvinyl alcohol fibers, acrylic fibers, polyolefin fibers, polyoxymethylene fibers, tetrafluoroethylene fibers, polyester fibers (including whole aromatic polyester fibers), polyphenylene sulfide fibers, polyimide fibers, and liquid polyester fibers. However, among them, the whole aromatic polyamide fibers (aramid fibers) are more preferable.

As those fibrous fillers, there can be used those having a fiber diameter of within the range of 3 to 60 µm, and among them, it is preferable to use, for example, one having a fiber diameter smaller than a width (width of groove or opening diameter of pore) of a marking pattern 5 formed on the joint surface 1a of the metal molded article 1. The fiber diameter is more desirably 5 to 30 µm, further desirably 7 to 20 µm.
When using a fibrous filler having such a fiber diameter smaller than a width of a marking pattern 5, a composite molded article in which a part of the fibrous filler enters into the marking pattern 5 of the metal molded article can be obtained, and it is preferable since the joint strength between the metal molded article and the resin molded article can be enhanced.
An amount of the fibrous filler to be blended relative to 100 parts by mass of the thermoplastic resin, thermosetting resin, and thermoplastic elastomer is preferably 5 to 250 parts by mass. More desirable is 25 to 200 parts by mass, further desirable is 45 to 150 parts by mass.

In the manufacturing method of the composite molded article of the present invention, a known laser can be used, and for example, there can be used YAG laser, semiconductor laser, glass laser, ruby laser, He-Ne laser, nitrogen laser, chelate laser, dye laser.

The scanning conditions of the laser, for example, wave length, beam diameter, space of markings, scanning speed, frequency, range to be scanned (forming area of marking) can be optionally determined depending on size, mass, type of metal and resin to be joined, furthermore joint strength to be required, and the like.

### Examples

### Examples 1, 2 and Comparative Example 1

A composite molded article (composite molded article 3 having the manner shown in Fig. 2 (a)) including a metal plate (SUS303) (width 12.5 mm, length 50 mm, and thickness 0.2 mm) and polyamide 66 was manufactured.

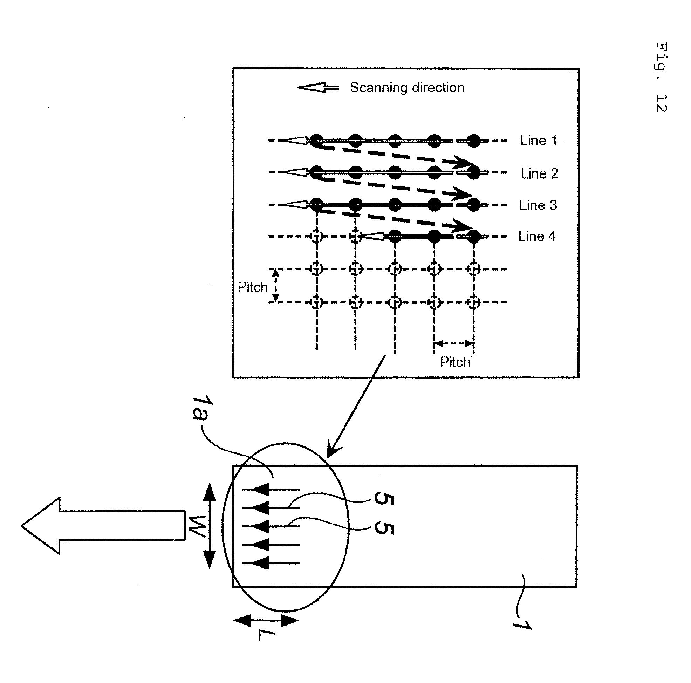

As shown in Fig. 12, the laser scanning was linearly performed at an angle of 90 degrees (from just above) with respect to the joint surface 1a of the metal plate 1, in only one direction (arrow direction in Fig. 12). The conditions of the laser scanning are as follows.

### <Conditions of laser scanning>

Laser: YAG
Power: 4.5 W
Wave length: 1064 mm
Beam diameter: 20 µm
Distance between lines (distance between center points of laser beams) (space between center points of lines of neighboring markings 5 shown in Fig. 12): 100 µm
Scanning speed: 100 mm/sec
Frequency: 50 kHz
Area to be machined (formation range of marking 5, i.e. range of width W=5 mm, length L=3 mm): 15 mm²

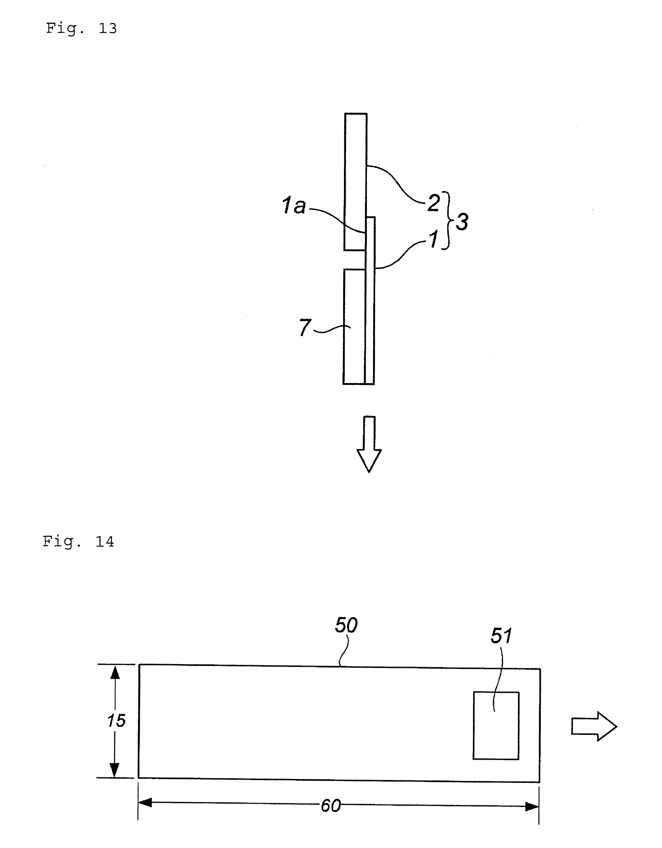

After the laser scanning was performed on the metal plate 1, the insert-molding was performed in the following method, and there was obtained a composite molded article 3 shown in Fig. 13, in which the metal plate 1 and the resin molded article 2 were joined and integrated. However, Fig. 13 shows a state where a spacer 7 for the tensile test (the spacer 7 is not included in the composite molded article 3 of the present invention) is attached.
Note that as Comparative Example 1, there was set a composite molded article obtained by injection-molding in the same manner through the use of a metal plate on which laser scanning is not performed.

### <Insert-molding (Injection-molding)>

Resin: GF 60 % reinforced PA 66 resin (Plastron PA66-GF60-01 (L9); manufactured by Daicel Polymer Ltd.)
Resin temperature: 320°C
Die temperature: 100°C
Injection-molding machine: FUNAC ROBOSHOT S-2000i-100B

Tensile test was conducted by using the composite molded article 3 (including the spacer 7) shown in Fig. 13. The results are shown in Table 1.

### <Conditions of Tensile test>

Testing instrument: TENSILON UCT-1T
Tensile speed: 5 mm/min.
Space between chucks: 50 mm
Tensile direction: Direction of white arrow (same direction as the marking 5) shown in Fig. 12 and Fig. 13

[Table 1]

**Table 1**

| | Example 1 | Example 2 | Comparative Example 1 |
|---|---|---|---|
| Number of markings | 1 | 3 | - |
| Shearing stress (MPa) | 15 | 24 | Unmeasurable |
| [Actual load (kgf) | 22 | 36 | Unmeasurable |

In Comparative Example 1, during preparation for the measurement, the metal plate 1 and the resin plate 2 were peeled off.

The number of markings means the number of laser scanning procedures. Example 1 is an example in which the laser scanning was performed only once, and Example 2 is an example in which the laser scanning was performed three times in total on one marking 5.

### Examples 3 to 8

A composite molded article (composite molded article having the manner shown in Fig. 2(a)) including a metal plate (SUS303) (width 15 mm, length 60 mm, and thickness 1 mm) and polyamide 66 was manufactured.

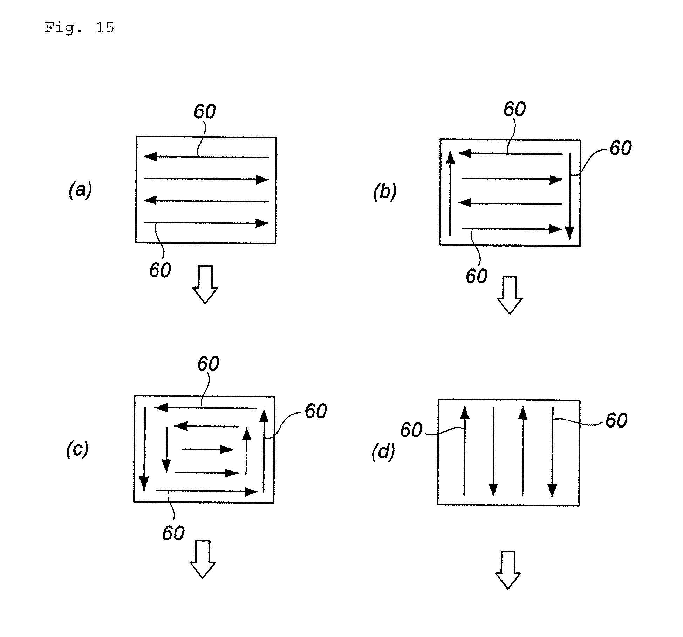

As shown in Figs. 15(a) to 15(d), the laser scanning was linearly performed on the joint surface 51 of the metal plate 50 at an angle of 90 degrees (from just above), within the laser irradiation area (formation area of marking 60, 40 mm² [4 mm x 10 mm]) in the metal plate (SUS304) (width 15 mm, length 60 mm, and thickness 1 mm) shown in Fig. 14. Note that Figs. 15 (a) to 15 (d) show the direction of marking or marking pattern, but do not show the number of actual markings.
The pattern in Fig. 15(c) of Example 7 is scanned in the manner of spiral including straight line.
Example 8 is an example in which the scanning has been performed twice on one marking 60.

The conditions of the laser scanning are in the followings.

### <Conditions of laser scanning>

Laser: YAG
Power: shown in Table 2
Wave length: 1064 mm
Beam diameter: 20 µm
Distance between lines (distance between center points of laser beams) (in Figs. 15(a) to 15(d), space between center points of lines of neighboring markings 60 in the same direction): 100 µm
Scanning speed: 100 mm/sec
Frequency: 50 kHz

After the laser scanning was performed on the joint surface 51 of the metal plate 50, the insert-molding was performed in the following method and there was obtained a composite molded article shown in Fig. 14, in which the metal plate and the resin molded article has been joined and integrated.
After the laser scanning was performed on the joint surface 51 of the metal plate 50, the insert-molding was performed in the following method and there was obtained a composite molded article shown in Fig. 14, in which the metal plate 50 and the resin molded article has been joined and integrated, and the spacer 7 for tensile test being the same as that of Fig. 13 has been attached.

### <Insert-molding (Injection-molding)>

Resin: GF 60 % reinforced PA 66 resin (Plastron PA66-GF60-01 (L9); manufactured by Daicel Polymer Ltd.)
Resin temperature: 320°C
Die temperature: 100°C
Injection-molding machine: FUNAC ROBOSHOT S-2000i-100B

### <Conditions of Tensile test>

Testing instrument: TENSILON UCT-1T
Tensile speed: 5 mm/min.
Space between chucks: 50 mm
Tensile direction: Direction of white arrow shown in Fig. 14 and Figs. 15 (a) to 15 (d). The test was performed five times, and a mean value of these was obtained.

**[Table 2]**

| | Example | | | | | |
|---|---|---|---|---|---|---|
| | 3 | 4 | 5 | 6 | 7 | 8 |
| Scanning pattern | Fig. 15(a) | Fig. 15(a) | Fig. 15(b) | Fig. 15(c) | Fig. 15(d) | Fig. 15(a) |
| Number of markings | 1 | 1 | 1 | 1 | 1 | 2 |
| Machine Power (W) | 4.5 | 14.5 | 14.5 | 14.5 | 14.5 | 14.5 |
| Shearing stress (MPa) | 6.6 | 13.6 | 14.8 | 18.00 | 25.3 | 25 |
| Actual load (kgf) | 26.4 | 54.3 | 59.3 | 72 | 101.4 | 96 |

## Claims

1. A method of manufacturing a composite molded article comprising a metal molded article and a resin molded article, the method comprising steps of:
performing laser scanning on a joint surface of the metal molded article so as to form markings including straight lines and/or curved lines in a certain direction or in the different direction, and performing laser scanning so that the markings including the respective straight lines and/or the respective curved lines do not intersect with each other; and
positioning, in a die, a portion including the joint surface of the metal molded article in which the marking is formed, to thereby perform insert-molding of a resin serving as the resin molded article.

2. A method of manufacturing a composite molded article comprising a metal molded article and a resin molded article, the method comprising steps of:
performing laser scanning on a joint surface of the metal molded article so as to form markings including straight lines and/or curved lines in a certain direction or in the different direction, and performing laser scanning radially so that the markings including the respective straight lines and/or the respective curved lines do not intersect with each other at a plurality of points; and
positioning, in a die, a portion including the joint surface of the metal molded article in which the marking is formed, to thereby perform insert-molding of a resin serving as the resin molded article.

3. The method of manufacturing a composite molded article according to claim 1, wherein the laser scanning step is a step of forming a straight line marking, with respect to the joint surface of the metal molded article, in the direction along the tensile direction, in the direction perpendicular to the tensile direction, or in the direction oblique to the tensile direction.

4. A method of manufacturing a composite molded article comprising a metal molded article and a resin molded article, the method comprising steps of:
performing laser scanning on a joint surface of the metal molded article so as to form a desired marking pattern including straight lines and/or curved lines, and performing laser scanning so that the markings including the respective straight lines and/or the respective curved lines constituting the desired marking pattern do not intersect with each other; and
positioning, in a die, a portion including the joint surface of the metal molded article in which the marking pattern is formed, to thereby perform insert-molding of a resin serving as the resin molded article.

5. The method of manufacturing a composite molded article according to claim 4, wherein
the laser scanning step is a step of forming the marking pattern on a joint surface of the metal molded article by arranging, in a plural number, the same lines or different lines selected from straight line, curved line (line forming an ark), polygonal line (V-shaped line), wave line, and zigzag line.

6. The method of manufacturing a composite molded article according to claim 4, wherein
the laser scanning step is a step of forming the marking pattern on a joint surface of the metal molded article so as to form a graphic having the same shape as that of the joint surface, and a plurality of graphics having the same center point and having different size.

7. The method of manufacturing a composite molded article according to claim 4, wherein
the laser scanning step is a step of forming the marking pattern on a joint surface of the metal molded article so as to form a volute with reference to a center point of the joint surface.

8. The method of manufacturing a composite molded article according to any one of claims 1 to 7, wherein
the joint surface of the metal molded article is selected from flat surface, curved surface, flat surface having irregularities, curved surface having irregularities, and combined surface thereof.

9. The method of manufacturing a composite molded article according to any one of claims 1 to 8, wherein
the resin molded article contains a fibrous filler, and a diameter of the fibrous filler is smaller than a width of the marking which is formed on the joint surface of the metal molded article and which includes each straight line and/or each curved line.
